# EUROPEAN PATENT SPECIFICATION

(11) **EP 3 317 318 B1**
(45) Date of publication and mention of the grant of the patent: **24.04.2019**
(21) Application number: 16728949.5
(22) Date of filing: 14.06.2016
(51) Int. Cl.: C08G 59/22, C08G 59/24, C08G 59/68, H01B 3/40

(54) **A THERMOSETTING EPOXY RESIN COMPOSITION FOR THE PREPARATION OF OUTDOOR ARTICLES, AND THE ARTICLES OBTAINED THEREFROM**
WÄRMEHÄRTENDE EPOXIDHARZZUSAMMENSETZUNG ZUR HERSTELLUNG VON OUTDOOR-ARTIKELN UND DARAUS HERGESTELLTE ARTIKEL
COMPOSITION DE RÉSINE ÉPOXY THERMODURCISSABLE POUR LA PRÉPARATION D'ARTICLES D'EXTÉRIEUR, ET ARTICLES OBTENUS À PARTIR DE CELLE-CI

(30) Priority: 02.07.2015 WO PCT/CN2015/083143
(43) Date of publication of application: 09.05.2018
(73) Proprietor: Huntsman Advanced Materials Licensing (Switzerland) GmbH, 4057 Basel (CH)
(72) Inventor: BEISELE, Christian, 79379 Müllheim (DE); LIU, Zhijian, Shanghai 200245 (CN); HISHIKAWA, Satoru, Osaka 531-0063 (JP)
(74) Representative: Winkler, Andreas Fritz Ernst
(86) International application number: PCT/EP2016/063556
(87) International publication number: WO 2017/001182

(56) References cited:
- EP-A2- 0 717 073
- WO-A1-2012/158292
- US-A1- 2013 154 129
- US-A1- 2014 072 731
- US-B1- 6 579 566
- US-B1- 6 638 567

## Description

The present invention relates to a process for the preparation of outdoor articles a as described in the present claims wherein the outside articles are insulation systems for electrical engineering, wherein the epoxy resin composition and the articles obtained by the said process. are also as described in the present claims. The insulation encased articles obtained are suitable for outdoor applications, exhibit good mechanical, electrical and dielectrical properties and can be used as, for example, insulators, bushings, switchgears and instrument transformers.

Epoxy resin compositions are commonly used for the preparation of insulation systems for electrical engineering. However, most of these epoxy resin compositions utilize anhydrides as curing agents. Due to the developing regulatory framework for chemicals, it is expected that the use of anhydrides in epoxy resins will be restricted in the near future, because of their R42 label (respiratory sensitizer). Therefore, some anhydrides are already on the SVHC candidate list (substances of very high concern) of the REACH regulation. It is likely that in some years these substances may no longer be used without special authorisation. As methyl hexahydrophthalic anhydride (MHHPA) and hexahydrophthalic anhydride (HHPA) are widely used as the main curing agents for cycloaliphatic outdoor epoxy resins for electrical insulation applications, there is a future need for alternative solutions that are not regarded as SVHC. As all known anhydrides are R42-labeled and even yet unknown anhydrides would be expected by toxicologists to be also R42-labeled, a solution that is free of anhydrides is desirable.

A one-component thermosetting epoxy resin composition for the preparation of encased electrical articles by automatic pressure gelation (APG) is suggested in EP-A-0813945. A cationic initiator system is used in this case, because anhydride cure is only practical in multicomponent systems, where the resin and the curing agent are stored in separate compartments and mixed shortly before use. However, the compositions disclosed are hardly suitable for outdoor applications, especially outdoor insulation systems for electrical engineering. Epoxy compositions for insulations for wire windings are disclosed in US-B-6579566.

Accordingly, there is a need for new thermosetting, anhydride-free epoxy compositions which advantageously can be used in potting or encapsulation applications for manufacturing of electrical insulation systems, such as switchgear or transformer applications, suitable for outdoor use.

It is an object of the present invention to provide an anhydride-free thermosetting epoxy resin composition which is suitable for the preparation of articles exposed to outdoor conditions, such as outdoor insulation systems for electrical engineering. The epoxy resin composition shall be R42-free and SVHC-free, and distinguished by a low water pick-up, a very good water diffusion break down strength, good tracking and erosion resistance and a long pot life (good latency). The epoxy resin composition shall be suitable for processing by automatic pressure gelation (APG). Still another object of the present invention is to provide the encased articles obtained from potting or encapsulation process which exhibit good mechanical, electrical and dielectrical properties, and can be used in outdoor applications, for example, as insulators, bushings, switchgears and instrument transformers in electrical engineering.

Surprisingly, it has been found that the use of a mixture of a cycloaliphatic glycidyl-type epoxy resin without an ester group, and a cycloaliphatic glycidyl-type epoxy resin containing an ester group provides epoxy resin systems which meet the above objectives.

Accordingly, the present invention relates to a a process for the preparation of outdoor articles and the articles produced by said process as described in the present claims.

The term "cycloaliphatic glycidyl-type epoxy resin" in the context of this invention denotes any epoxy resin having cycloaliphatic structural units, that is to say it includes cycloaliphatic glycidyl compounds and β-methylglycidyl compounds as well as epoxy resins based on cycloalkylene oxides.

The at least one cycloaliphatic glycidyl-type epoxy resin (a1), that is an epoxy resin which does not contain an ester group, is a compound containing at least one vicinal epoxy group, preferably more than one vicinal epoxy group, for example, two or three vicinal epoxy groups. The epoxy resin may be a monomeric or polymeric compound. Epoxy resins useful as the component (a1) are described, for example, in GB-A-1144638, US-A-3425961, and Lee, H. and Neville, Handbook of Epoxy Resins, McGraw-Hill Book Company, New York (1982).

Particularly suitable cycloaliphatic glycidyl-type epoxy resins (a1) without an ester group are known to the skilled worker and are based on, for example, reaction products of polyfunctional cycloaliphatic alcohols, or polyfunctional aliphatic alcohols containing cycloaliphatic groups with epichlorohydrin.

Polyfunctional cycloaliphatic alcohols or polyfunctional aliphatic alcohols containing cycloaliphatic groups which come into consideration for reaction with epichlorhydrin to form suitable polyglycidyl ethers are, for example, 1,2-cyclohexanediol, 1,3-cyclohexanediol, 1,4-cyclohexanediol (quinitol), 1,4-bis(hydroxymethyl)cyclohexane, 1,1-bis(hydroxymethyl)cyclohex-3-ene, bis(4-hydroxycyclohexyl)methane (hydrogenated bisphenol F), 2,2-bis(4-hydroxycyclohexyl)propane (hydrogenated bisphenol A), 2,2-bis(3-methyl-4-hydroxycyclohexyl)propane (hydrogenated bisphenol C), 1,1-bis(4-hydroxycyclohexyl)ethane (hydrogenated bisphenol E), 1,3-cyclopentanediol, 4,4'-dihydroxydicyclohexane, 2,6-bis(4'-hydroxycyclohexylmethyl)-1-hydroxycyclohexane 1,3,5-trihydroxycyclohexane, 1,2,2-tris(4-hydroxycyclohexyl)ethane, or hydrogenated phenolformaldehyde condensation products having 3 to 10 cyclohexane rings.

The at least one cycloaliphatic glycidyl-type epoxy resin (a1) without an ester group is either commercially available or can be prepared according to processes known per se. Such processes are described, for example, in GB-A-1144638 (Epoxide resins A, B C, D and F) and US-A-3425961 (Examples 1, 2 and 6). Commercially available products are, for example, DY-C, a low viscous cycloaliphatic glycidyl-type epoxy resin available from Huntsman Corporation; EP4080E, a low viscous hydrogenated bisphenol A epoxy resin available from Adeka, Japan; or YX8000, a low viscous hydrogenated bisphenol A epoxy resin available from Mitsubishi Chemical, Japan.

In a preferred embodiment of the present invention the at least one cycloaliphatic glycidyl-type epoxy resin (a1) without an ester group is a diglycidylether of hydrogenated bisphenol F or a diglycidylether of hydrogenated bisphenol A. Especially, the at least one epoxy resin (a1) is a diglycidylether of hydrogenated bisphenol A.

The at least one cycloaliphatic glycidyl-type epoxy resin (a2) is a compound containing at least one ester group, and at least one vicinal epoxy group, preferably more than one vicinal epoxy group, for example, two or three vicinal epoxy groups. The epoxy resin may be a monomeric or polymeric compound. Epoxy resins useful as component (a2) are described, for example, in GB-A-1144638, and Lee, H. and Neville, Handbook of Epoxy Resins, McGraw-Hill Book Company, New York (1982).

Particularly suitable cycloaliphatic glycidyl-type epoxy resins (a2) are known to the skilled worker and are based on, for example, glycidyl esters of mono or polyfunctional cycloaliphatic carboxylic acids, or mono or polyfunctional carboxylic acids containing one or more epoxydized cycloalkylene groups, or glycidyl esters of carboxylic acids which contain an epoxydized cycloalkylene group. Particularly suitable epoxy resins (a2) include diglycidyl-4,5-epoxycyclohexane-3-methyl-1,2-dicarboxylate; diglycidyl-4,5-epoxycyclohexane-1,2-dicarboxylate; hexahydrophthalic acid-bis-glycidyl-ester, such as hexahydro-o-phthalic acid-bis-glycidyl-ester, hexahydro-m-phthalic acid-bis-glycidyl ester and hexahydro-p-phthalic acid-bis-glycidyl ester; diglycidyl-3,4-epoxycyclohexane-1,1-dicarboxylate; glycidyl-3,4-epoxycyclohexane carboxylate; or 3',4'-epoxycyclohexylmethyl-3,4-epoxycyclohexane carboxylate.

The at least one cycloaliphatic glycidyl-type epoxy resin (a2) containing an ester group is either commercially available or can be prepared according to processes known per se. Commercially available products are, for example, CY184 or CY179 which are low viscous cycloaliphatic epoxy resins available from Huntsman Corporation.

In a preferred embodiment of the present invention the at least one cycloaliphatic glycidyl-type epoxy resin (a2) which contains an ester group is hexahydrophthalic acid-bis-glycidyl-ester, or 3',4'-epoxycyclohexylmethyl-3,4-epoxycyclohexane carboxylate.

The total amount of epoxy resin (A) in the epoxy resin composition can vary in wide ranges and is dependent on the use of the composition. In case the composition is used for the preparation of insulation systems for electrical engineering, the amount of epoxy resin (A) is, for example, of from 85 weight percent (wt %) to 99.95 wt %, preferably of from 95 wt % to 99.95 wt %, and especially of from 97 wt % to 99.95 wt %, based on the total weight of the components (A) and (B) in the composition.

The at least one cationic curing agent (B) is as defined in the present claims.

Preferably N-benzylquinolinium hexafluoroantimonate is used together with 1,1,2,2-tetraphenyl-1,2-ethanediol, for example, in a molar ratio of about 1:1.

In the present invention the at least one cationic curing agent (B) is dibenzylphenylsulfonium hexafluoroantimonate, or N-benzylquinolinium hexafluoroantimonate together with 1,1,2,2-tetraphenyl-1,2-ethanediol (benzopinacol).

The activation temperature of the cationic initiators is generally above room temperature, preferably in the range of from 60 to 180°C, especially from 90 to 150°C.

The amount of the at least one cationic curing agent system (B) in the epoxy resin composition is generally of from 0.05 weight percent (wt %) to 15 wt %, preferably of from 0.05 wt % to 5 wt %, and especially of from 0.05 wt % to 3 wt %, based on the total weight of the components (A) and (B) in the composition.

The at least one silanized filler (C), as an optional component of the inventive epoxy resin composition, is either commercially available or can be prepared according to processes known per se, for example, by silanization of suitable fillers with epoxy silane or amino silane. Suitable fillers are, for example, metal powder, wood flour, glass powder, glass beads, semi-metal oxides, metal oxides, metal hydroxides, semi-metal and metal nitrides, semi-metal and metal carbides, metal carbonates, metal sulfates, and natural or synthetic minerals. The filler material is appropriately coated with a silane known in the art for coating of filler materials, either before the filler is added to the epoxy resin composition, or alternatively, by adding the filler and the silane to the epoxy resin composition, whereupon the silanized filler is formed in the composition.

A suitable filler is selected, for example, from the group quartz sand, quartz powder, silica, aluminium oxide, titanium oxide, zirconium oxide, Mg(OH)₂, Al(OH)₃, dolomite [CaMg (CO₃)₂], Al(OH)₃, AIO(OH), silicon nitride, boron nitrides, aluminium nitride, silicon carbide, boron carbides, dolomite, chalk, calcium carbonate, barite, gypsum, hydromagnesite, zeolites, talcum, mica, kaolin and wollastonite. Preferred is quarz, silica, wollastonite or calcium carbonate, especially quarz or silica. Suitable silica is, for example, crystalline or amorphous silica, especially fused silica.

The amount of silanized filler (C) in the final composition can vary in wide ranges and is dependent on the use of the composition. In case the composition is used for the preparation of insulation systems for electrical engineering, the amount of silanized filler (C) is, for example, of from 30 weight percent (wt %) to 75 wt %, based on the total weight of the thermosetting epoxy resin composition. In one embodiment, the amount of silanized filler (C) is, for example, of from 40 wt % to 75 wt %, based on the total weight of the thermosetting epoxy resin composition. In another embodiment, the amount of silanized filler (C) is, for example, of from 50 wt % to 70 wt %, based on the total weight of the thermosetting epoxy resin composition. In still another embodiment, the amount of silanized filler (C) is, for example, of from 60 wt % to 70 wt %, based on the total weight of the thermosetting epoxy resin composition.

Further additives may be selected from processing aids to improve the rheological properties of the resin composition, hydrophobic compounds including silicones, wetting/dispersing agents, plasticizers, dyes, pigments, reactive or non-reactive diluents, flexibilizers, accelerators, antioxidants, light stabilizers, pigments, flame retardants, fibers, fungicides, thixotropic agents, toughness improvers, antifoams, antistatics, lubricants, anti-settling agents, wetting agents and mould-release agents and other additives generally used in electrical applications. These additives are known to the person skilled in the art.

In a one embodiment, the inventive thermosetting epoxy resin composition contains at least one silanized filler (C), in particular, if the epoxy resin composition is used for the preparation of outdoor insulation systems for electrical engineering.

The thermosetting epoxy resin composition comprises components (A) (B) (C) as defined in the present claims.

The epoxy resin composition according to the present invention are R42-free and SVHC-free, and distinguished by a low water pick-up, a very good water diffusion break down strength, good tracking and erosion resistance and a long pot life (good latency).

The epoxy resin composition according to the present invention can advantageously be used for the manufacturing of insulation systems for electrical engineering, in particular, insulation systems exposed to outdoor environment, for example, outdoor insulators and bushings, outdoor instrument transformers and distribution transformers, outdoor switch gears, reclosers, load break switches and locomotive insulators.

The inventive compositions can also be used for the manufacturing of other articles exposed to outdoor environment, for example, composite articles, such as water pipes and water containers, or coatings for air core reactors.

In case the composition is used for the preparation of outdoor articles other than insulation systems for electrical engineering, for example, the preparation of composite articles or coatings for air core reactors, silanized filler (C) may be omitted.

The glass transition temperature of the articles prepared from the epoxy resin composition according to the present invention can be adjusted as desired, for example, in the range of from 50°C to 190°C.

Generally, insulation systems are prepared by casting, potting, encapsulation, and impregnation processes such as gravity casting, vacuum casting, automatic pressure gelation (APG), vacuum pressure gelation (VPG), infusion, and the like.

A typical process for making insulation systems for electrical engineering, such as cast resin epoxy insulators, is automatic pressure gelation (APG). APG allows for the preparation of a casting product made of an epoxy resin in a short period of time by hardening and forming the epoxy resin. In general, an APG apparatus to carry out the APG process includes a pair of molds (herafter called mold), a resin mixing and degassing tank connected to the mold through a pipe, and an opening and closing system for opening and closing the mold.

In a typical APG process, a metal conductor or an insert, which is pre-heated and dried, is placed into the mold located in a vacuum chamber. After closing of the mold by an opening and closing system, the epoxy resin composition is injected into the mold from an inlet located at the bottom of the mold by applying pressure to the resin mixing tank. Before injection, the resin composition is normally held at a moderate temperature of 40 to 60°C to ensure an appropriate pot life (usable time of the epoxy resin), while the temperature of the mold is kept at around 120°C or above to obtain the casting products within a reasonably short time. After injection of the epoxy resin composition into the hot mold, the resin composition cures while the pressure applied to the epoxy resin in the resin mixing tank is kept at about 0.1 to 0.5 MPa.

Large casting products made of more than 10 kg of resin may be produced conveniently by the APG process within a short time, for example, of from 20 to 60 minutes. Normally, the casting product released from the mold is post cured in a separate curing oven to complete the reaction of the epoxy resin.

The present invention also relates to a process for the preparation of outdoor articles, as described in the present claims the said outdoor articles are insulation systems for electrical engineering, in particular, insulation systems prepared by casting, potting, encapsulation, and impregnation processes such as gravity casting, vacuum casting, automatic pressure gelation (APG), vacuum pressure gelation (VPG), filament winding, pultrusion and infusion. Preferred are automatic pressure gelation (APG) and vacuum casting, especially automatic pressure gelation (APG).

Preparation of insulation systems for electrical engineering is often carried out by Automatic Pressure Gelation (APG) or Vacuum Casting. When using known epoxy resin compositions based on anhydride cure, such processes typically include a curing step in the mold for a time sufficient to shape the epoxy resin composition into its final infusible three dimensional structures, typically up to ten hours, and a post-curing step of the demolded article at elevated temperature to develop the ultimate physical and mechanical properties of the cured epoxy resin composition. Such a post-curing step may take, depending on the shape and size of the article, up to thirty hours.

Compared to the known epoxy resin compositions based on anhydride cure, shorter curing times can be applied. Moreover, the post-cure time can be shortened and the post-cure temperature lowered, all of which safes process time and energy. A post-cure treatment may even be omitted. The pot life of the present thermosetting epoxy resin composition is sufficient to use common application techniques known in the art. Compared to the epoxy resin compositions of the prior art, the present epoxy resin composition is distinguished by low odor emission, because the use of respiratory sensitizing anhydrides is omitted. Moreover, hazardous amine type curing accelerators are not required.

The process according to the present invention is, in particular, useful for the preparation of encased articles for outdoor use exhibiting good mechanical, electrical and dielectrical properties.

Accordingly, the present invention is directed to an insulation system article obtained by the process according to the present invention. The glass transition temperature of the article is in the same range as for known anhydride based thermosetting epoxy resin compositions. The flexural strength of the article is 110 MPa or higher.

Possible uses of the electrical insulation system articles prepared according to the present invention are, for example, outdoor recloser, outdoor load break switchgears, outdoor instrument transformer, outdoor distribution transformer, outdoor insulators, outdoor bushings, railway insulators, and electrical articles for indoor application requiring high tracking and erosion resistance and/or water diffusion strength, for example, DDT for offshore wind power generators.

In particular the articles prepared in accordance with the inventive process are used for medium and high voltage electrical insulation system articles (1 kV to 145 kV).

The following Examples serve to illustrate the invention. Unless otherwise indicated, the temperatures are given in degrees Celsius, parts are parts by weight and percentages relate to % by weight. Parts by weight relate to parts by volume in a ratio of kilograms to litres.

### Description of ingredients:

CY184: low viscous cycloaliphatic epoxy resin with an epoxy equivalent of 5.8 to 6.1 Eq/kg. Supplier: Huntsman, Switzerland.
CY179: 3',4'-epoxycyclohexylmethyl-3,4-epoxycyclohexane carboxylate. Supplier: Huntsman, Switzerland.
EP4080E: low viscous hydrogenated bisphenol A epoxy resin with an epoxy equivalent of 4.3 to 5 Eq/kg. Supplier: ADEKA, Japan.
YX8000: low viscous hydrogenated bisphenol A epoxy resin with an epoxy equivalent of 4.5 to 5.2 Eq/kg. Supplier: Mitsubishi Chemical, Japan.
HY1235BD: liquid, modified cycloaliphatic anhydride hardener. Supplier: Huntsman, Germany.
DY062: liquid, tertiary amine, catalyst. Supplier: Huntsman, China.
W12EST: silica treated with epoxysilane. Supplier: Quarzwerke, Germany.
Benzopinacol: Supplier: Aldrich, Germany.
FB XB6079A: N-benzylquinolinium hexafluoroantimonate. Supplier: Huntsman, Germany
RT1507: dibenzylphenylsulfonium hexafluoroantimonate. Supplier: Huntsman, Switzerland
Apyral 60D: Al(OH)₃. Supplier: Nabaltek, Germany
PC: propylene carbonate. Supplier: TaiZhou TaiDa, China
CY5622: hydrophobic epoxy resin based on CY184 comprising a hydrophobic package. Supplier: Huntsman, Switzerland

### Comparative Example 1:

(a) CY184 is preheated at 40°C in an oven for 0.5 h. In a steel vessel, 90 g of HY1235BD are added to 100 g of preheated CY184 under stirring for about 5 minutes. Stirring is discontinued, 0.6 g of DY062 is added to the mixture, and stirring is continued for about 2 minutes. Stirring is discontinued again, and the composition in the vessel is degassed carefully by applying a vacuum for about 1 minute. The mixture is used to measure the Gel time at 120°C and 140°C with a Gelnorm and the viscosity at 40°C and 80°C with a Brookfield viscometer.
(b) CY184 is preheated at 80°C in an oven for 0.5h. In a steel vessel, 180 g of HY1235 BD are added to 200 g of preheated CY184 under stirring for about 5 minutes. Then, 740 g of W12EST are added to the stirred mixture in portions within 20 minutes. Subsequently, the composition in the vessel is preheated in an oven at 80°C for 0.5 h, the vessel is removed from the oven, 1.2 g of DY062 are added, and stirring is continued for 2 to 3 minutes. Stirring is discontinued and the composition in the vessel is degassed carefully by applying a vacuum for about 2 to 3 minutes. The composition is poured into a hot aluminium mold treated with a mold release agent QZ13 and preheated to 80°C, to prepare specimens of 4 mm, 6 mm and 10 mm thickness for testing. The composition in the mold is degassed carefully by applying a vacuum for about 1 to 2 minutes, and cured in an oven at 80°C for 6 h, and at 140°C for another 10 h. After curing, the specimens are removed from the mold and allowed to cool to ambient temperature.

### Comparative Example 2:

(a) CY184 is preheated at 40°C in an oven for 0.5 h. In a steel vessel, 5.1 g of CY179 are added to 85.3 g of preheated CY184 under stirring for about 1 minute. Stirring is discontinued and 5.5 g of a solution of benzopinacol in CY179 (10 wt %) and 4.1 g of a solution of FB XB6079A in CY179 (10 wt %) are added and stirring is continued for 2 to 3 minutes. Stirring is discontinued again and the composition is degassed carefully by applying a vacuum for about 1 minute. The mixture is used to measure the Gel time at 120°C and 140°C with a Gelnorm and the viscosity at 40°C and 80°C with a Brookfield viscometer.
(b) CY184 is preheated at 80°C in an oven for 0.5h. In a steel vessel, 10.2 g of CY179 are added to 170.6 g of preheated CY184 under stirring for about 2 minutes. Then, 388.2 g of W12EST are added to the stirred mixture in portions within 20 minutes. Subsequently, the composition in the vessel is preheated in an oven at 80°C for 0.5 h, the vessel is removed from the oven, and 11.0 g of a solution of benzopinacol in CY179 (10 wt % of benzopinacol) and 8.2 g of a solution of FB XB6079A in CY179 (10 wt % of FB XB6079A) are added and stirring is continued for about 5 minutes. Stirring is discontinued and the composition in the vessel is degassed carefully by applying a vacuum for about 2 to 5 minutes. The composition is poured into a hot aluminium mold treated with a mold release agent QZ13 and preheated to 100°C, to prepare specimens of 4 mm, 6 mm and 10 mm thickness for testing. The composition in the mold is degassed carefully by applying a vacuum for about 1 to 2 minutes, and cured in an oven at 100°C for 6 h, and at 140°C for another 10 h. After curing, the specimens are removed from the mold and allowed to cool to ambient temperature.

### Comparative Example 3:

Comparative Example 2 is repeated, but in (a) 85.3 g of CY184 are replaced by 93.7 g of CY5622; and in (b) 170.6 g of CY184 are replaced by 187.4 g of CY5622, and 420.8 g of W12EST are used instead of 388.2 g of W12EST.

### Comparative Example 4:

(a) CY184 is preheated at 40°C in an oven for 0.5 h. In a steel vessel, 15.0 g of CY179 are added to 84.0 g of preheated CY184 under stirring for about 2 to 3 minutes. Stirring is discontinued and 1.0 g of a solution of RT1507 in PC (50 wt %) is added and stirring is continued for about 1 minute. Stirring is discontinued again and the composition is degassed carefully by applying a vacuum for about 1 minute. The mixture is used to measure the Gel time at 120°C with a Gelnorm and the viscosity at 40°C and 80°C with a Brookfield viscometer.
(b) CY184 is preheated at 70°C in an oven for 0.5h. In a steel vessel, 30.0 g of CY179 are added to 168.0 g of preheated CY184 under stirring for about 2 minutes. Then, 388.2 g of W12EST are added to the stirred mixture in portions within 20 minutes. Subsequently, the composition in the vessel is preheated in an oven at 70°C for 0.5 h, and the composition is degassed carefully by applying a vacuum for about 5 to 10 minutes. Then, the composition in the vessel is preheated in an oven at 70°C for 10 minutes, the vessel is removed from the oven, and 2.0 g of a solution of RT1507 in PC (50 wt %) are added and stirring is continued for about 1 to 2 minutes. Stirring is discontinued and the composition in the vessel is degassed carefully by applying a vacuum for about 1 to 3 minutes. The composition is poured into a hot aluminium mold treated with a mold release agent QZ13 and preheated to 80°C, to prepare specimens of 4 mm, 6 mm and 10 mm thickness for testing. The composition in the mold is degassed carefully by applying a vacuum for about 1 to 2 minutes, and cured in an oven at 80°C for 6 h, and at 140°C for another 10 h. After curing, the specimens are removed from the mold and allowed to cool to ambient temperature.

### Comparative Example 5:

Comparative Example 4 is repeated, but in (a) 84.0 g of CY184 are replaced by 84.0 g of CY5622; and in (b) 168.0 g of CY184 are replaced by 168.0 g of CY5622. Curing in accordance with (b) is carried out at 70°C for 6 h, and at 140°C for another 10 h in an aluminium mold preheated to 70°C.

### Example 1:

(a) YX8000 is preheated at 40°C in an oven for 0.5 h. In a steel vessel, 5.0 g of CY179 are added to 85.4 g of preheated YX8000 under stirring for about 1 minute. Stirring is discontinued and 5.5 g of a solution of benzopinacol in CY179 (10 wt %) and 4.1 g of a solution of FB XB6079A in CY179 (10 wt %) are added and stirring is continued for 2 to 3 minutes. Stirring is discontinued again and the composition is degassed carefully by applying a vacuum for about 1 minute. The mixture is used to measure the Gel time at 140°C with a Gelnorm and the viscosity at 40°C and 80°C with a Brookfield viscometer.
(b) YX8000 is preheated at 80°C in an oven for 0.5h. In a steel vessel, 10.0 g of CY179 are added to 170.8 g of preheated YX8000 under stirring for about 2 minutes. Then, 388.2 g of W12EST are added to the stirred mixture in portions within 20 minutes. Subsequently, the composition in the vessel is preheated in an oven at 80°C for 0.5 h, the vessel is removed from the oven, and 11.0 g of a solution of benzopinacol in CY179 (10 wt % of benzopinacol) and 8.2 g of a solution of FB XB6079A in CY179 (10 wt % of FB XB6079A) are added and stirring is continued for about 5 minutes. Stirring is discontinued and the composition in the vessel is degassed carefully by applying a vacuum for about 2 to 5 minutes. The composition is poured into a hot aluminium mold treated with a mold release agent QZ13 and preheated to 90°C, to prepare specimens of 4 mm, 6 mm and 10 mm thickness for testing. The composition in the mold is degassed carefully by applying a vacuum for about 1 to 2 minutes, and cured in an oven at 90°C for 6 h, and at 160°C for another 10 h. After curing, the specimens are removed from the mold and allowed to cool to ambient temperature.

### Example 2:

(a) YX8000 and CY184 are preheated at 40°C in an oven for 0.5 h. In a steel vessel, 43.5 g of preheated CY184 are added to 43.5 g of preheated YX8000 under stirring for about 2 minutes. Stirring is discontinued and 7.4 g of a solution of benzopinacol in CY179 (10 wt %) and 5.6 g of a solution of FB XB6079A in CY179 (10 wt %) are added and stirring is continued for 2 to 3 minutes. Stirring is discontinued again and the composition is degassed carefully by applying a vacuum for about 1 minute. The mixture is used to measure the Gel time at 140°C with a Gelnorm and the viscosity at 40°C and 80°C with a Brookfield viscometer.
(b) YX8000 and CY184 are preheated at 80°C in an oven for 0.5h. In a steel vessel, 87.0 g of preheated CY184 are added to 87.0 g of preheated YX8000 under stirring for about 2 minutes. Then, 388.2 g of W12EST are added to the stirred mixture in portions within 20 minutes. Subsequently, the composition in the vessel is preheated in an oven at 80°C for 0.5 h, the vessel is removed from the oven, and 14.8 g of a solution of benzopinacol in CY179 (10 wt % of benzopinacol) and 11.2 g of a solution of FB XB6079A in CY179 (10 wt % of FB XB6079A) are added and stirring is continued for about 5 minutes. Stirring is discontinued and the composition in the vessel is degassed carefully by applying a vacuum for about 2 to 5 minutes. The composition is poured into a hot aluminium mold treated with a mold release agent QZ13 and preheated to 100°C, to prepare specimens of 4 mm, 6 mm and 10 mm thickness for testing. The composition in the mold is degassed carefully by applying a vacuum for about 1 to 2 minutes, and cured in an oven at 100°C for 6 h, and at 160°C for another 10 h. After curing, the specimens are removed from the mold and allowed to cool to ambient temperature.

### Example 3:

Example 2 is repeated, but in (a) 43.5 g of preheated YX8000 are replaced by 43.5 g of preheated EP4080E; and in (b) 87.0 g of preheated YX8000 are replaced by 87.0 g of preheated EP4080E, and 329.4 g of W12EST and 58.8 g of Apyral 60D are used instead of 388.2 g of W12EST.

### Example 4:

Example 2 is repeated, but in (a) 43.5 g of preheated YX8000 are replaced by 34.8 g of preheated EP4080E, and 43.5 g of preheated CY184 are replaced by 52.2 g of preheated CY5622; and in (b) 87.0 g of preheated YX8000 are replaced by 69.6 g of preheated EP4080E, and 87.0 g of preheated CY184 are replaced by 104.4 g of preheated CY5622.

### Example 5:

Example 2 is repeated, but in (a) 43.5 g of preheated YX8000 are replaced by 17.4 g of preheated EP4080E, and 43.5 g of preheated CY184 are replaced by 69.6 g of preheated CY5622; and in (b) 87.0 g of preheated YX8000 are replaced by 34.8 g of preheated EP4080E, and 87.0 g of preheated CY184 are replaced by 139.2 g of preheated CY5622.

### Example 6:

(a) YX8000 and CY184 are preheated at 40°C in an oven for 0.5 h. In a steel vessel, 10.0 g of CY179 are added to 70.0 g of preheated CY184 and 19.5 g of preheated YX8000 under stirring for about 2 to 3 minutes. Stirring is discontinued and 0.5 g of a solution of RT1507 in PC (50 wt %) is added and stirring is continued for about 1 minute. Stirring is discontinued again and the composition is degassed carefully by applying a vacuum for about 1 minute. The mixture is used to measure the Gel time at 120°C with a Gelnorm and the viscosity at 40°C with a Brookfield viscometer.
(b) YX8000 and CY184 are preheated at 70°C in an oven for 0.5h. In a steel vessel, 20.0 g of CY179 are added to 140.0 g of preheated CY184 and 39.0 g of preheated YX8000 under stirring for about 2 minutes. Then, 329.4 g of W12EST and 58.8 g of Apyral 60D are added to the stirred mixture in portions within 20 minutes. Subsequently, the composition in the vessel is preheated in an oven at 70°C for 0.5 h, and the composition is degassed carefully by applying a vacuum for about 5 to 10 minutes. Then, the composition in the vessel is preheated in an oven at 70°C for 10 minutes, the vessel is removed from the oven, and 1.0 g of a solution of RT1507 in PC (50 wt %) is added and stirring is continued for about 1 to 2 minutes. Stirring is discontinued and the composition in the vessel is degassed carefully by applying a vacuum for about 1 to 3 minutes. The composition is poured into a hot aluminium mold treated with a mold release agent QZ13 and preheated to 80°C, to prepare specimens of 4 mm, 6 mm and 10 mm thickness for testing. The composition in the mold is degassed carefully by applying a vacuum for about 1 to 2 minutes, and cured in an oven at 80°C for 6 h, and at 160°C for another 10 h. After curing, the specimens are removed from the mold and allowed to cool to ambient temperature.

**Table 1: Test data**

| Example | Comp Ex 1 | Comp Ex 2 | Comp Ex 3 | Ex 1 | Ex 2 | Ex 3 | Ex 4 | Ex 5 |
|---|---|---|---|---|---|---|---|---|
| Pot life at 40°C¹⁾ | good | good | good | good | good | good | good | good |
| Gel time at 140°C²⁾ [min] | 3.4 | 4.1 | | 1.8 | 2.5 | 3.5 | 3.0 | |
| Flexural strength³⁾ [MPa] | 146 | 131 | | 116 | 122 | 116 | 124 | |
| Tg⁴⁾ [°C] | 111 | 117 | 113 | 100 | 126 | 111 | 104 | |
| Tracking Resistance⁵⁾ | P | F | P | P | P | P | P | P |
| Water diffusion test⁶⁾ | P at 12 kV | Fat 12 kV | Fat 12 kV | P at 12 kV | P at 12 kV | P at 12 kV | P at 12 kV | P at 12 kV |

| | | | | | | | | |
|---|---|---|---|---|---|---|---|---|
| 1) Target > 6 h 2) Gel norm method; specimens without filler 3) ISO 178 4) IE 1006; Differential Scanning Calorimetry on a Mettler SC 822e (range: 20 to 250°C at 10°C min-1) 5) IEC 60587; Tracking at 3.5 kV (pass at least 4 of 5 specimens) 6) IEC 62217; boiling for 100h P = test passed; F = test failed | | | | | | | | |

**Table 2: Test data**

| Example | Comp Ex 1 | Comp Ex 4 | Comp Ex 5 | Ex 6 |
|---|---|---|---|---|
| Pot life at 40°C¹⁾ | good | good | | good |
| Gel time at 120°C²⁾ [min] | 8.5 | 4.3 | | 4.2 |
| Flexural strength³⁾ [MPa] | 146 | 140 | | 128 |
| Tg⁴⁾ [°C] | 111 | 110 | | 101 |
| Tracking Resistance⁵⁾ | P | F | P | P |
| Water diffusion test⁶⁾ | P at 12 kV | F at 12 kV | F at 12 kV | P at 12 kV |

| | | | | |
|---|---|---|---|---|
| 1) Target > 6 h 2) Gel norm method; specimens without filler 3) ISO 178 4) IE 1006; Differential Scanning Calorimetry on a Mettler SC 822e (range: 20 to 250°C at 10°C min-1) 5) IEC 60587; Tracking at 3.5 kV (pass at least 4 of 5 specimens) 6) IEC 62217; boiling for 100h P = test passed; F = test failed | | | | |

Comparative Example 1 is based on anhydride curing, and represents the state of the art composition in use for casting, potting and encapsulation since more than 40 years. It performs well in all aspects, except that the anhydride used is R 42 labelled (may cause sensitization by inhalation) and SVHC listed.

Comparative Examples 2 and 4 are entirely based on an epoxy resin comprising carboxylic ester groups. The compositions fail the tests as to water diffusion break down strength and tracking resistance and, therefore, are not suitable for outdoor use.

Comparative Examples 3 and 5 are entirely based on an epoxy resin comprising carboxylic ester groups which is hydrophobically modified. The compositions fail the test as to water diffusion break down strength and, therefore, are not suitable for outdoor use.

The inventive compositions of Examples 1 to 6 all exhibit a long pot life, and pass the tests as to water diffusion break down strength and tracking resistance. The mechanical performance is comparable to state of the art systems currently in use.

## Claims

1. A process for the preparation of an outdoor article, wherein the outdoor article is an insulation system for electrical engineering prepared by casting, potting, encapsulation, or an impregnation process.
wherein a thermosetting resin composition is used, said resin composition comprising
(A) a glycidyl-type epoxy resin comprising a mixture of
(a1) from 10 wt% to 90 wt% of at least one cycloaliphatic glycidyl-type epoxy resin
without an ester group selected from a polyglycidylether of 1,2-cyclohexanediol, 1,3-cyclohexanediol, 1,4-cyclohexanediol (quinitol), 1,4-bis(hydroxymethyl)cyclohexane, 1,1-bis(hydroxymethyl)cyclohex-3-ene, bis(4-hydroxycyclohexyl)methane (hydrogenated bisphenol F), 2,2-bis(4-hydroxycyclohexyl)propane (hydrogenated bisphenol A), 2,2-bis(3-methyl-4-hydroxycyclohexyl)propane (hydrogenated bisphenol C), 1,1-bis(4-hydroxycyclohexyl)ethane (hydrogenated bisphenol E), 1,3-cyclopentanediol, 4,4'-dihydroxydicyclohexane, 2,6-bis(4'-hydroxycyclohexylmethyl)-1-hydroxycyclohexane, 1,3,5-trihydroxycyclohexane, 1,2,2-tris(4-hydroxycyclohexyl)ethane, or hydrogenated phenolformaldehyde condensation products having 3 to 10 cyclohexane rings,
and
(a2) from 90 wt% to 10 wt% of at least one cycloaliphatic glycidyl-type epoxy resin containing an ester group selected from diglycidyl-4,5-epoxycyclohexane-3-methyl-1,2-dicarboxylate, diglycidyl-4,5-epoxycyclohexane-1,2-dicarboxylate, hexahydrophthalic acid-bis-glycidyl-ester, diglycidyl-3,4-epoxycyclohexane-1,1-dicarboxylate, glycidyl-3,4-epoxycyclohexane carboxylate, or 3',4'-epoxycyclohexylmethyl-3,4-epoxycyclohexane carboxylate,
each based on the total weight of (a1) and (a2),
(B) at least one cationic curing agent selected from dibenzylphenylsulfonium hexafluoroantimonate, or N-benzylquinolinium hexafluoroantimonate together with 1,1,2,2-tetraphenyl-1,2-ethanediol (benzopinacol), and optionally
(C) at least one silanized filler.

2. The process according to claim 1, wherein the insulation system for electrical engineering is prepared by automatic pressure gelation (APG), or vacuum casting.

3. The process according to any of the preceding claims, wherein the at least one cycloaliphatic glycidyl-type epoxy resin (a1) without an ester group is a diglycidylether of hydrogenated bisphenol F, or a diglycidylether of hydrogenated bisphenol A

4. The process according to any of the preceding claims, wherein the said at least one cycloaliphatic epoxy resin (a2) containing an ester group is hexahydrophthalic acid-bis-glycidyl-ester, or 3',4'-epoxycyclohexylmethyl-3,4-epoxycyclohexane carboxylate.

5. The process according to any the preceding claims, wherein the said at least one silanized filler (C) is obtained by silanization of quartz sand, quartz powder, silica, aluminium oxide, titanium oxide, zirconium oxide, Mg(OH)₂, Al(OH)₃, dolomite [CaMg (CO₃)₂], Al(OH)₃, AlO(OH), silicon nitride, boron nitrides, aluminium nitride, silicon carbide, boron carbides, dolomite, chalk, calcium carbonate, barite, gypsum, hydromagnesite, zeolites, talcum, mica, kaolin or wollastonite.

6. The process according to any of the preceding claims, wherein the said at least one silanized filler (C) is obtained by silanization of quarz, silica, wollastonite or calcium carbonate.

7. An article obtained by the process according to any one of claims 1 to 6.

8. Use of the article according to claim 7, for medium and high voltage switchgear applications and as medium and high voltage instrument transformers.

## Patentansprüche

1. Verfahren zur Herstellung eines Outdoor-Artikels, wobei der Outdoor-Artikel ein Isolierungssystem für die Elektrotechnik ist, hergestellt durch Gießen, Einbetten, Einkapselung oder ein Imprägnierungsverfahren,
wobei eine wärmehärtende Harzzusammensetzung verwendet wird, wobei die Harzzusammensetzung
(A) ein Epoxidharz vom Glycidyl-Typ, das eine Mischung aus
(a1) von 10 Gew.-% bis 90 Gew.-% wenigstens eines cycloaliphatischen Epoxidharzes vom Glycidyl-Typ ohne eine Estergruppe, das ausgewählt ist aus einem Polyglycidylether von 1,2-Cyclohexandiol, 1,3-Cyclohexandiol, 1,4-Cyclohexandiol (Chinitol), 1,4-Bis(hydroxymethyl)cyclohexan, 1,1-Bis(hydroxymethyl)cyclohex-3-en, Bis(4-hydroxycyclohexyl)methan (hydriertes Bisphenol F), 2,2-Bis(4-hydroxycyclohexyl)propan (hydriertes Bisphenol A), 2,2-Bis(3-methyl-4-hydroxycyclohexyl)propan (hydriertes Bisphenol C), 1,1-Bis(4-hydroxycyclohexyl)ethan (hydriertes Bisphenol E), 1,3-Cyclopentandiol, 4,4'-Dihydroxydicyclohexan, 2,6-Bis(4'-hydroxycyclohexylmethyl)-1-hydroxycyclohexan, 1,3,5-Trihydroxycyclohexan, 1,2,2-Tris(4-hydroxycyclohexyl)ethan oder hydrierten Phenol-Formaldehyd-Kondensationsprodukten mit 3 bis 10 Cyclohexanringen,
und
(a2) von 90 Gew.-% bis 10 Gew.-% wenigstens eines cycloaliphatischen Epoxidharzes vom Glycidyl-Typ, das eine Estergruppe enthält, ausgewählt aus Diglycidyl-4,5-epoxycyclohexan-3-methyl-1,2-dicarboxylat, Diglycidyl-4,5-epoxycyclohexan-1,2-dicarboxylat, Hexahydrophthalsäurebisglycidylester, Diglycidyl-3,4-epoxycyclohexan-1,1-dicarboxylat, Glycidyl-3,4-epoxycyclohexancarboxylat oder 3',4'-Epoxycyclohexylmethyl-3,4-epoxycyclohexancarboxylat,
jeweils auf der Basis des Gesamtgewichtes von (a1) und (a2), umfasst,
(B) wenigstens ein kationisches Härtungsmittel, ausgewählt aus Dibenzylphenylsulfoniumhexafluoroantimonat oder N-Benzylchinoliniumhexafluoroantimonat, zusammen mit 1,1,2,2-Tetraphenyl-1,2-ethandiol (Benzopinacol) und fakultativ
(C) wenigstens einen silanisierten Füllstoff
umfasst.

2. Verfahren nach Anspruch 1, wobei das Isolierungssystem für die Elektrotechnik hergestellt ist durch automatische Druckgelierung (APG) oder Vakuumgießen.

3. Verfahren nach einem der vorangehenden Ansprüche, wobei das wenigstens eine cycloaliphatische Epoxidharz vom Glycidyl-Typ (a1) ohne eine Estergruppe ein Diglycidylether von hydriertem Bisphenol F oder ein Diglycidylether von hydriertem Bisphenol A ist.

4. Verfahren nach einem der vorangehenden Ansprüche, wobei das wenigstens eine cycloaliphatische Epoxidharz (a2), das eine Estergruppe enthält, Hexahydrophthalsäurebisglycidylester oder 3',4'-Epoxycyclohexylmethyl-3,4-epoxycyclohexancarboxylat ist.

5. Verfahren nach einem der vorangehenden Ansprüche, wobei der wenigstens eine silanisierte Füllstoff (C) erhalten wird durch Silanisierung von Quarzsand, Quarzpulver, Silika, Aluminiumoxid, Titanoxid, Zirconiumoxid, Mg(OH)₂, Al(OH)₃, Dolomit [CaMg(CO₃)₂], Al(OH)₃, AIO(OH), Siliciumnitrid, Bornitriden, Aluminiumnitrid, Siliciumcarbid, Borcarbiden, Dolomit, Kreide, Calciumcarbonat, Barit, Gips, Hydromagnesit, Zeolithen, Talkum, Glimmer, Kaolin oder Wollastonit.

6. Verfahren nach einem der vorangehenden Ansprüche, wobei der wenigstens eine silanisierte Füllstoff (C) erhalten wird durch Silanisierung von Quarz, Silika, Wollastonit oder Calciumcarbonat.

7. Artikel, erhalten mit dem Verfahren nach einem der Ansprüche 1 bis 6.

8. Verwendung des Artikels nach Anspruch 7 für Mittel- und Hochspannungsschaltvorrichtungsanwendungen und als Mittel- und Hochspannungswandler.

## Revendications

1. Procédé pour la préparation d'un article d'extérieur, dans lequel l'article d'extérieur est un système d'isolation pour le génie électrique préparé par coulée, empotage, encapsulation ou un procédé d'imprégnation,
dans lequel une composition de résine thermodurcissable est utilisée, ladite composition de résine comprenant
(A) une résine époxy de type glycidylique comprenant un mélange de
(a1) de 10 % en poids à 90 % en poids d'au moins une résine époxy de type glycidylique cycloaliphatique sans groupe ester choisie parmi les éthers polyglycidyliques de cyclohexane-1,2-diol, de cyclohexane-1,3-diol, de cyclohexane-1,4-diol (quinitol), de 1,4-bis(hydroxyméthyl)cyclohexane, de 1,1-bis(hydroxyméthyl)cyclohex-3-ène, de bis(4-hydroxycyclohexyl)méthane (bisphénol F hydrogéné), de 2,2-bis(4-hydroxycyclohexyl)propane (bisphénol A hydrogéné), de 2,2-bis(3-méthyl-4-hydroxycyclohexyl)propane (bisphénol C hydrogéné), de 1,1-bis(4-hydroxycyclohexyl)éthane (bisphénol E hydrogéné), de cyclopentane-1,3-diol, de 4,4'-dihydroxydicyclohexane, de 2,6-bis(4'-hydroxycyclohexylméthyl)-1-hydroxycyclohexane, de 1,3,5-trihydroxycyclohexane, de 1,2,2-tris(4-hydroxycyclohexyl)éthane ou les produits de condensation de phénol-formaldéhyde hydrogénés ayant 3 à 10 cycles cyclohexane
et
(a2) de 90 % en poids à 10 % en poids d'au moins une résine époxy de type glycidylique cycloaliphatique contenant un groupe ester choisie parmi le 4,5-époxycyclohexane-3-méthyl-1,2-dicarboxylate de diglycidyle, le 4,5-époxycyclohexane-1,2-dicarboxylate de diglycidyle, l'ester diglycidylique de l'acide hexahydrophtalique, le 3,4-époxycyclohexane-1,1-dicarboxylate de diglycidyle, le 3,4-époxycyclohexanecarboxylate de glycidyle ou le 3,4-époxycyclohexanecarboxylate de 3',4'-époxycyclohexylméthyle,
chacun par rapport au poids total de (a1) et (a2),
(B) au moins un agent durcisseur cationique choisi entre l'hexafluoroantimoniate de dibenzylphénylsulfonium et l'hexafluoroantimoniate de N-benzylquinolium conjointement avec le 1,1,2,2-tétraphényléthane-1,2-diol (benzopinacol) et éventuellement
(C) au moins une charge silanisée.

2. Procédé selon la revendication 1, dans lequel le système d'isolation pour le génie électrique est préparé par gélification sous pression automatique (APG) ou coulée sous vide.

3. Procédé selon l'une quelconque des revendications précédentes, dans lequel l'au moins une résine époxy de type glycidylique cycloaliphatique (a1) sans groupe ester est un éther diglycidylique de bisphénol F hydrogéné ou un éther diglycidylique de bisphénol A hydrogéné.

4. Procédé selon l'une quelconque des revendications précédentes, dans lequel ladite au moins une résine époxy cycloaliphatique (a2) contenant un groupe ester est l'ester diglycidylique de l'acide hexahydrophtalique ou le 3,4-époxycyclohexanecarboxylate de 3',4'-époxycyclohexylméthyle.

5. Procédé selon l'une quelconque des revendications précédentes, dans lequel ladite au moins une charge silanisée (C) est obtenue par silanisation de sable quartzeux, de poudre de quartz, de silice, d'oxyde d'aluminium, d'oxyde de titane, d'oxyde de zirconium, de Mg(OH)₂, d'Al(OH)₃, de dolomite [CaMg(CO₃)₂], d'Al(OH)₃, d'AlO(OH), de nitrure de silicium, de nitrures de bore, de nitrure d'aluminium, de carbure de silicium, de carbures de bore, de dolomite, de craie, de carbonate de calcium, de baryte, de gypse, d'hydromagnésite, de zéolites, de talc, de mica, de kaolin ou de wollastonite.

6. Procédé selon l'une quelconque des revendications précédentes, dans lequel ladite au moins une charge silanisée (C) est obtenue par silanisation de quartz, de silice, de wollastonite ou de carbonate de calcium.

7. Article obtenu par le procédé selon l'une quelconque des revendications 1 à 6.

8. Utilisation de l'article selon la revendication 7, pour des applications d'appareillage de commutation à moyenne et haute tension et en tant que transformateurs de mesure à moyenne et haute tension.
